# EUROPÄISCHE PATENTSCHRIFT

(11) **EP 0 679 831 B1**
(45) Veröffentlichungstag und Bekanntmachung des Hinweises auf die Patenterteilung: **24.10.2001**
(21) Anmeldenummer: 95105575.5
(22) Anmeldetag: 13.04.1995
(51) Int. Cl.: F16L 47/00, F16L 47/02

(54) **Verbindungsformteil für Abzweiganschlüsse bei einer Rohrleitung**
Connection piece for branching pipe
Article de connexion pour tuyaux de branchement

(30) Priorität: 29.04.1994 CH 133894
(43) Veröffentlichungstag der Anmeldung: 02.11.1995
(73) Patentinhaber: Georg Fischer Rohrleitungssysteme AG, CH-8201 Schaffhausen (CH)
(72) Erfinder: Bunger, Lars, CH-8200 Schaffhausen (CH); Hilger, Helmut, CH-8200 Schaffhausen (CH)
(74) Vertreter: Weiss, Wolfgang, Dr.

(56) Entgegenhaltungen:
- EP-A- 0 378 406
- EP-A- 0 528 261
- DE-A- 4 220 574
- DE-C- 4 012 297
- GB-A- 2 136 074

## Beschreibung

Die Erfindung betrifft ein Verbindungsformteil aus Kunststoff zur Herstellung von Abzweiganschlüssen bei einer Kunststoffrohrleitung, wie es im Oberbegriff von Anspruch 1 gekennzeichnet ist.

In der EP 0 378 406 A2 ist eine Elektroschweissverbindung aus Kunststoff für die Heisswasserversorgung beschrieben. Es ist beispielsweise in Figur 14 ein Verbindungsformteil aus mindestens drei Teilen beschrieben, nämlich ein Grundkörper mit einem sattelförmigen und einem zylindrischen Bereich, wobei in diese Bereiche jeweils eine elektrische Heizwicklung angeordnet ist. Zwischen den beiden Wicklungen ist ein beträchtlicher Abstand vorgesehen.

Weiterhin offenbart die DE 42 20 574 A1 eine Rohrverbindung aus einem Rohrverbinder, der davon umschlossenen Rohrenden anliegt und im Bereich der Kontaktfläche mit einer Heizwicklung zur Herstellung einer Fusionsschweissverbindung versehen ist. Diese Lösung ist nicht geeignet für unter Druck stehenden, Medium führenden Leitungen.

Die GB 2 136 074 A zeigt eine Elektroschweissverbindung mit einem sattelförmigen Bereich, in dem eine spiralförmige elektrische Heizdrahtwicklung angeordnet ist. Eine Wicklung im zylindrischen Bereich ist nicht beschrieben.

Die DE-A1-22 08 862 zeigt ein Verbindungsformteil der eingangs genannten Art, deren Abzweigformteil stirnseitig anschliessend an den Rohrstutzen mittels einer Elektroschweissmuffe verbunden wird. Nachteilig ist die grosse Bauhöhe, da der Abzweigstutzen für die Abzweigleitung erst oberhalb der Schweissmuffe angeordnet werden kann. Ausserdem weisen die beiden getrennten Heizwicklungen vier Anschlüsse auf und zur Herstellung der Verbindung sind zwei getrennte Schweissungen erforderlich.

Auch das in der DE-C1-40 12 297 gezeigte Verbindungsformteil weist zwei getrennte mit je zwei Anschlüssen versehene Heizelemente auf, welche als eine mit Widerstandsdraht bewickelte Scheibe ausgebildet sind. Die flanschförmige Verbindung zwischen dem sattelförmigen Teil und dem Abzweigrohrstück erfordert' an beiden Teilen viel Material, so dass die Verbindung in der Herstellung sehr aufwendig ist.

Aufgabe der vorliegenden Erfindung ist die Schaffung eines Verbindungsformteiles der eingangs genannten Art, welches wenige Teile mit einer geringeren Bauhöhe aufweist und mittels welchem einfach und schnell eine Rohrabzweigung an eine Rohrleitung erstellbar ist. Weiterhin soll der Abzweiganschluss mediumsdicht und bei einer unter Mediumsdruck stehenden Leitung hergestellt werden.

Erfindungsgemäss wird diese Aufgabe durch die kennzeichnenden Merkmale von Anspruch 1 gelöst.

Vorteilhafte Weiterbildungen der Erfindung sind in den von Anspruch 1 abhängigen Ansprüchen gekennzeichnet.

Die Erfindung ist anhand eines Ausführungsbeispiels gemäß Figur 4 beschrieben. Die Figuren 1 bis 3 zeigen Verbindungsformteile, die nicht von den Ansprüchen umfasst sind. Es zeigen:
- Fig. 1: ein Verbindungsformteil mit einem einen Rohranbohrer aufweisenden Abzweigformteil teilweise im Schnitt
- Fig. 2: ein Verbindungsformteil mit einem eingeschweissten Abzweigrohr im Schnitt
- Fig. 3: eine Draufsicht von Fig. 2 und
- Fig. 4: einen Schnitt durch ein Verbindungsformteil mit einem Ausführungsbeispiel eines Schweisselementes

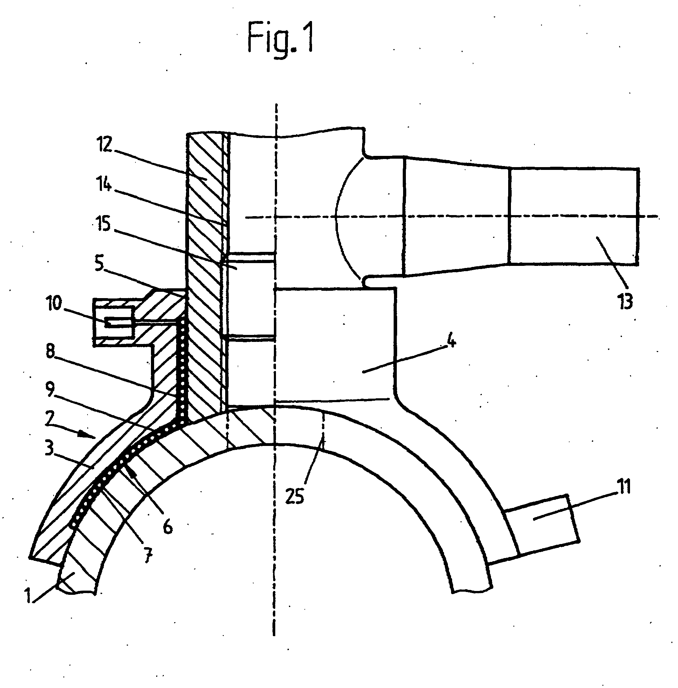

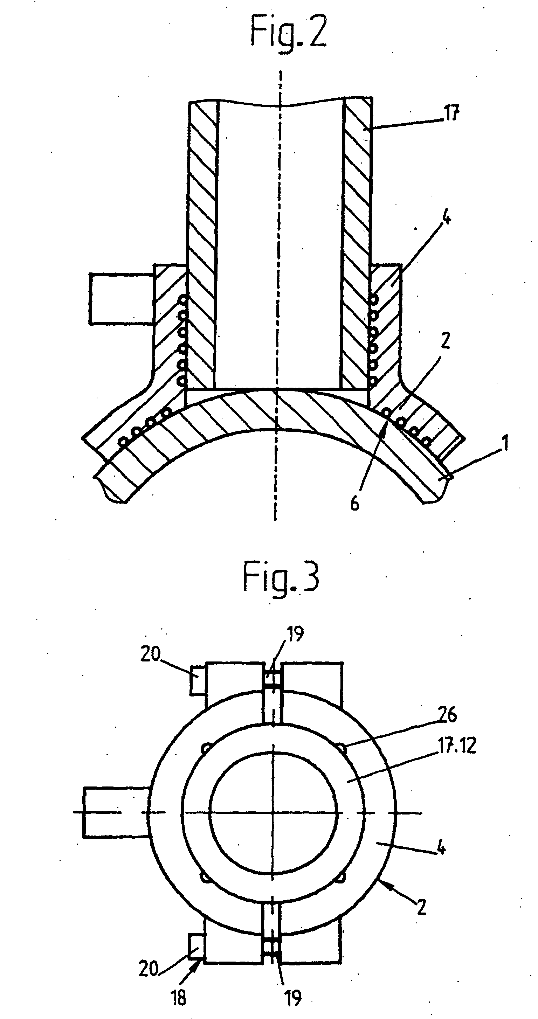

Fig. 1 zeigt ein auf eine Kunststoffrohrleitung 1 aufgesetztes Verbindungsformteil 2 aus Kunststoff, welches ein Sattelteil 3 und einen Rohrstutzen 4 aufweist, wobei beide Teile mit einer Durchgangsöffnung 5 versehen sind. Das Verbindungsformteil 2 weist ein Schweisselement 6 auf, welches aus einer ersten Heizwicklung 7 an der Innenkontur des Sattelteils 3 und einer zweiten Heizwicklung 8 am Innenumfang des Rohrstutzens 4 besteht. Beide Heizwicklungen 7, 8 sind vorzugsweise aus einem Stück Widerstandsdraht 9 gefertigt und bilden somit zusammenhängend das Schweisselement 6. Beide Heizwicklungen 7, 8 können auch aus je einem getrennten Widerstandsdraht 9 hergestellt werden, wobei die beiden Teildrähte miteinander verbunden werden. Die erste Heizwicklung 7 ist ausgehend von einem äusseren Durchmesser bis zu einem der Durchgangsöffnungen 5 entsprechenden inneren Durchmesser spiralförmig gewickelt, wobei neben einer runden Wicklung auch eine viereckige oder eine andere Wicklungsform möglich ist. Die zweite Heizwicklung 8 schliesst an das innere Ende der ersten Heizwicklung 7 als zylinderförmige Wicklung an, deren Wicklungen übereinander senkrecht zur ersten Heizwicklung 7 angeordnet sind.
Das äussere Ende der ersten Heizwicklung 7 und das obere Ende der zweiten Heizwicklung 8 sind mit Steckanschlüssen 10, 11 verbunden, an weiche ein Schweissgerät anschliessbar ist.
Bei der Fig. 1 gezeigten Ausführungsvariante des Schweisselementes 6 besteht dieses aus einem mit Kunststoff ummantelten Widerstandsdraht 9 dessen Windungen eng aneinander liegen und vorzugsweise miteinander durch eine Schweissung verbunden sind, wodurch ein kompaktes Schweisselement 6 gebildet wird. Bei der Herstellung des Verbindungsformteiles 2 im Spritzgussverfahren wird das Schweisselement 6 in die Spritzform eingelegt, wobei beim Einspritzen des Kunststoffes in die Form eine Stoffschlussverbindung mit dem Schweisselement 6 entsteht und dieses im Verbindungsformteil eingebettet wird. Im Verbindungsformteil 2 ist ein Abzweigformteil 12 eingesteckt angeordnet, welches durch eine Schweissung mit diesem verbunden wird. Das Abzweigformteil 12 weist in bekannter Weise einen Abzweigstutzen 13 für eine anzuschliessende Abzweigrohrleitung und einen in einem Innengewinde 14 eingeschraubten Rohranbohrer 15 auf.
Zur Herstellung eines mediumdichten Abzweiganschlusses an der Rohrleitung 1 wird das Verbindungsformteil 2 an der anzubohrenden Stelle aufgesetzt und mittels einer Spanneinrichtung wie z.B. Spannbänder am Rohr festgehalten. Das Abzweigformteil 12 wird in das Verbindungsformteil 2 eingesteckt und mit dem Abzweigstutzen 13 entsprechend der Anschlussrichtung ausgereichtet. Dann wird an den Steckanschlüssen 10,11 das Schweissgerät angeschlossen und durch Erhitzen der beiden Heizwicklungen 7 und 8 gleichzeitig eine mediumsdichte Schweissverbindung einerseits mit der Rohrleitung 1 und andererseits mit dem Abzweigformteil 12 hergestellt. Nach dem Anschluss der Abzweigleitung wird mittels eines Rohranbohres 15 eine Öffnung 25 in der unter Mediumsdruck stehenden Rohrleitung 1 in bekannter Weise erzeugt und so der Durchfluss in die Abzweigleitung hergestellt.

Gemäss Fig. 2 wird das Verbindungsformteil 2 zur direkten Herstellung eines Abzweiganschlusses verwendet, wobei ein Rohr 17 in das Verbindungsformteil 2 eingesteckt wird und wie in Fig. 1 beschrieben die Schweissverbindungen hergestellt werden.
Damit das Abzweigformteil 12 (Fig. 1) oder das Rohr 17 (Fig. 2) vor dem Verschweissen in der Lage fixiert werden kann, weist das Verbindungsteil 2 wie aus Fig. 3 ersichtlich am Ende des Rohrstutzen 4 eine Klemmvorrichtung 18 auf. Diese besteht z.B. aus am Rohrstutzen 4 angeordneten Schlitzen 19 und Schrauben 20 oder einem Spannband, mittels welchen das eingesteckte Abzweigformteil 12 bzw. das Rohr 17 festgeklemmt wird.
Damit das Abzweigformteil 12 mit seinem Abzweigstutzen 13 in einer vorbestimmten Winkellage wie z.B. 0° oder 90° zur Längsachse der Rohrleitung eingesteckt und verschweisst werden kann, sind am Rohrstutzen 4 des Verbindungsformteil 2 Positionierungen 26 vorgesehen, welche z.B. aus Nuten am Rohstutzen 4 und einem Nocken oder Leiste am Abzweigformteil 12 bestehen.

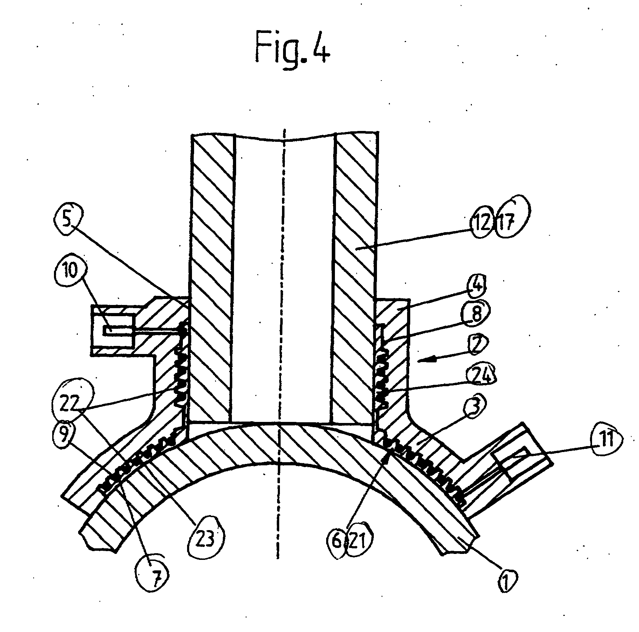

Fig. 4 zeigt ein Verbindungsformteil 2 mit einem Ausführungsbeispiel des Schweisselementes 6, welches aus einem Wicklungsträger 21 aus Kunststoff und einem in Rillen 22 eingelegten blanken Widerstandsdraht 9 besteht
Der Wicklungsträger 21 weist eine die erste Heizwicklung 7 aufnehmende sattelförmige Partie 23 und eine die zweite Heizwicklung 8 aufnehmende zylinderförmige Partie 24 mit der Durchgangsöffnung 5 auf.
Der mit dem Widerstandsdraht 9 bewickelte Wicklungsträger 21 wird vor dem Spritzen des Verbindungsformteiles 2 wie bereits beschrieben in die Form eingelegt, wodurch nach dem Spritzen die Heizwicklungen 7, 8 ganz in Kunststoff eingebettet sind.
Der Vorteil dieses Ausführungsbeispiels liegt darin, dass ein blanker Widerstandsdraht verwendet wird und die Schweissverbindungsflächen glatt ausgebildet sind, so dass keine Blasenbildung erfolgt und eine bessere Schweissung erreichbar ist.

## Patentansprüche

1. Verbindungsformteil (2) aus Kunststoff zur Herstellung von Abzweiganschlüssen an eine Kunststoffrohrleitung (1) mit einem die Rohrleitung (1) teilweise umschliessenden, eine Durchgangsöffnung 5 aufweisenden Sattelteil (3), einem Rohrstutzen (4) und einem Heizwicklungen (7, 8) aufweisenden Schweisselement (6), wobei die erste Heizwicklung (7) im Bereich des Sattelteils (3) und die zweite Heizwicklung (8) am Innenumfang des Rohrstutzens (4) angeordnet ist und die Wicklungsenden des Schweisselementes (6) Anschlüsse (10, 11 ) für ein Schweissgerät bilden, wobei gleichzeitig eine Schweissverbindung zwischen dem Sattelteil (3) und der Rohrleitung (1) sowie zwischen dem Rohrstutzen (4) und einem eingesteckten Abzweigformteil (12) bzw. einem Rohr (17) herstellbar ist, wobei das Verbindungsformteil (2) zur Herstellung von mediumsdichten Abzweiganschlüssen an einer unter Mediumdruck stehenden Kunststoffrohrleitung verwendbar ist, **dadurch gekennzeichnet, dass** das Schweisselement (6) aus einem einstückigen Wicklungsträger (21) aus Kunststoff mit einem in Rillen (22) angeordneten blanken Widerstandsdraht (9) besteht, dass der Wicklungsträger (21) aus einer die erste Heizwicklung (7) aufnehmenden sattelförmigen Partie (23) und aus einer die zweite Heizwicklung (8) aufnehmenden zylinderförmigen Partie (24) mit einer Durchgangsöffnung (5) besteht, dass das Schweisselement (6) durch eine Stoffschlussverbindung im Verbindungsformteil (2) eingebettet angeordnet ist, dass beide Heizwicklungen (7, 8) aus einem einstückigen Widerstandsdraht hergestellt sind.

2. Verbindungsformteil nach Anspruch 1, **dadurch gekennzeichnet, dass** die erste Heizwicklung (7) ausgehend von einem äusseren Durchmesser bis zu einem der Durchgangsöffnung (5) entsprechenden inneren Durchmesser spiralförmig gewickelt ausgebildet ist und die zweite Heizwicklung (8) als zylinderförmige Wicklung senkrecht zur ersten Heizwicklung (7)an deren inneren Durchmesser angeordnet ist.

3. Verbindungsformteil nach Anspruch 1 oder 2, **dadurch gekennzeichnet, dass** am Einsteckende des Rohrstutzens (4) eine das eingesteckte Abzweigformteil (12) bzw. Rohr (17) fixierende Klemmvorrichtung (18) angeordnet ist.

## Claims

1. Plastic moulded connection piece (2) for producing branch connections to a plastic pipeline (1), with a saddle part (3), partly enclosing the pipeline (1) and having a through-opening (5), a pipe socket (4) and a welding element (6), having heating coils (7, 8), the first heating coil (7) being arranged in the region of the saddle part (3) and the second heating coil (8) being arranged on the inner circumference of the pipe socket (4), and the ends of the coils of the welding element (6) forming connections (10, 11) for a welding device, it being possible for a welded connection to be established simultaneously between the saddle part (3) and the pipeline (1) and also between the pipe socket (4) and an inserted moulded branching piece (12) or a pipe (17), it being possible for the moulded connection piece (2) to be used for establishing medium-impermeable branching connections at a plastic pipeline under pressure of a medium, **characterized in that** the welding element (6) comprises a one-piece plastic coil former (21) with a bare resistance wire arranged in grooves (22), **in that** the coil former (21) comprises a saddle-shaped portion (23) receiving the first heating coil (7) and a cylindrical portion (24), with a through-opening (5), receiving the second heating coil (8), **in that** the welding element (6) is arranged such that it is embedded in the moulded connection piece (2) by an integral bond, and **in that** both heating coils (7, 8) are produced from a one-piece resistance wire.

2. Moulded connection piece according to Claim 1, **characterized in that** the first heating coil (7) is formed such that it is spirally wound, from an outer diameter to an inner diameter corresponding to the through-opening (5), and the second heating coil (8) is arranged as a cylindrical coil perpendicular to the first heating coil (7) on the inner diameter of the latter.

3. Moulded connection piece according to Claim 1 or 2, **characterized in that** a clamping device (18), fixing the inserted moulded branching piece (12) or tube (17), is arranged on the insertion end of the pipe socket (4).

## Revendications

1. Pièce de raccordement préformée (2) en matière plastique pour la fabrication de raccords de branchement sur une conduite en matière plastique (1) avec une pièce de semelle (3) entourant partiellement la conduite (1) et présentant une ouverture de passage (5), un embout tubulaire (4) et un élément de soudage (6) présentant des enroulements de chauffage (7, 8), dans laquelle le premier enroulement de chauffage (7) est disposé dans la région de la pièce de semelle (3) et le deuxième enroulement de chauffage (8) sur le pourtour intérieur de l'embout tubulaire (4), et les extrémités des enroulements de l'élément de soudage (6) forment des raccords (10, 11) pour un appareil de soudage, dans laquelle on peut réaliser en même temps un assemblage soudé entre la pièce de semelle (3) et la conduite (1) ainsi qu'entre l'embout tubulaire (4) et une pièce de branchement préformée (12) insérée, respectivement un tube (17), dans laquelle la pièce de raccordement préformée (2) peut être utilisée pour la réalisation de raccords de branchement étanches au fluide sur une conduite en matière plastique se trouvant sous une pression de fluide, **caractérisée en ce que** l'élément de soudage (6) se compose d'un support d'enroulement en une pièce (21) en matière plastique avec un fil résistant nu (9) disposé dans des sillons (22), **en ce que** le support d'enroulement (21) se compose d'une partie en forme de semelle (23) portant le premier enroulement de chauffage (7) et d'une partie de forme cylindrique (24) portant le deuxième enroulement de chauffage (8) avec une ouverture de passage (5), **en ce que** l'élément de soudage (6) est noyé dans la pièce de raccordement préformée (2) par liaison des matières, et **en ce que** les deux enroulements de chauffage (7, 8) sont fabriqués à partir d'un fil résistant d'une seule pièce.

2. Pièce de raccordement préformée suivant la revendication 1, **caractérisée en ce que** le premier enroulement de chauffage (7) est formé par un enroulement en spirale à partir d'un diamètre extérieur jusqu'à un diamètre intérieur correspondant à l'ouverture de passage (5) et le deuxième enroulement de chauffage (8) est disposé sous forme d'un enroulement cylindrique perpendiculairement au premier enroulement de chauffage (7) sur le diamètre intérieur de celui-ci.

3. Pièce de raccordement préformée suivant la revendication 1 ou 2, **caractérisée en ce qu'**un dispositif de serrage (18), fixant la pièce de branchement préformée (12) insérée, respectivement le tube (17) inséré, est disposé à l'extrémité d'insertion de l'embout tubulaire (4).
